# EUROPEAN PATENT SPECIFICATION

(11) **EP 3 282 463 B1**
(45) Date of publication and mention of the grant of the patent: **24.03.2021**
(21) Application number: 17185582.8
(22) Date of filing: 09.08.2017
(51) Int. Cl.: H01H 1/58, H01H 9/04, H01H 13/06, H01H 13/10, H01H 13/18

(54) **SWITCH DEVICE AND DETECTING APPARATUS EQUIPPED WITH IT**
SCHALTVORRICHTUNG UND ERKENNUNGSVORRICHTUNG DAMIT
DISPOSITIF DE COMMUTATION ET APPAREIL DE DÉTECTION EN ÉTANT ÉQUIPÉ

(30) Priority: 10.08.2016 JP 2016157437
(43) Date of publication of application: 14.02.2018
(73) Proprietor: Alps Alpine Co., Ltd., Tokyo 145-8501 (JP)
(72) Inventor: TANAKA, Takaki, Tokyo (JP); SUGAWARA, Tatsuo, Tokyo (JP)
(74) Representative: Schmitt-Nilson Schraud Waibel Wohlfrom Patentanwälte Partnerschaft mbB

(56) References cited:
- EP-A1- 2 685 483
- EP-A2- 0 708 465
- DE-A1- 19 510 491
- US-A1- 2014 151 213

## Description

### BACKGROUND OF THE INVENTION

### 1. Field of the Invention

The present invention relates to a switch device attached to an external base material having external terminals and to a detecting apparatus in which the switch device is attached to the external base material.

### 2. Description of the Related Art

Japanese Unexamined Patent Application Publication No. 2004-253194 describes an invention related to a switch device used in, for example, a door of an automobile.

In this switch device, a manipulation body is provided outside the housing of the switch device and a movable contact is provided in the housing so as to be operated by the manipulation body. Two terminal plates are included in the housing. On each terminal plate, a contact that comes into contact with the movable contact and a touching part that comes into contact with an external terminal are formed.

A pair of external terminals protrude from a mounting member to which the switch device is attached. A pair of mounting legs are formed integrally on the mounting member so as to protrude in parallel to the external terminals. When the switch device is attached to the mounting member, the mounting legs abut both sides of the housing almost at the same time as when the external terminals are inserted into the interior of the housing. When the switch device is pushed toward the mounting member in this state, each external terminal comes into contact with the touching part of the relevant terminal plate and a hook provided at the top of each mounting leg is engaged to the upper surface of the housing, fixing the switch device.

EP 0 708 465 A2 discloses a switch. A fixed terminal having a fixed contact and a L-shaped moving member terminal are mounted through oblong openings of a bottom plate of a switch case at each one end. A moving switch-plate having a moving contact at one end part is suspended on the other end part of the L-shaped moving member terminal with a change-over member and a U-shaped leaf spring so that the longitudinal direction of the moving switch-plate is substantially parallel to the bottom plate of the switch case, and that the other end of the moving switch-plate is moved by a slide member to operate the switch.

DE 195 10 491 A1 discloses an electromechanical switch which has a fixed contact at the end of an L shaped arm within a housing and locates against a support wall. The movable contact is in the form of a leaf spring contact carrier with an arm that extends beyond the contact pad location. The tip is shaped with an indent that receives the end of an actuator pin and this is supported in a sealing element and is displaced by movement of a cap. A coil spring provides a return force.

The present invention relates to a switch device and a detecting apparatus according to the appended claims.

### SUMMARY OF THE INVENTION

The switch device described in Japanese Unexamined Patent Application Publication No. 2004-253194 lacks a guide structure between the housing and the mounting member to which the housing is attached. If the mounting member has a wide space in an area in which the switch device is attached, there is no problem. If the switch device has to be attached in a narrow area, however, attachment work may become complex.

The present invention addresses the above conventional problem by providing a switch device that can be easily attached to an external base material and a detecting apparatus to which the switch device is attached.

In a switch device that has a housing, at least two internal terminals provided in the housing, a movable contact, and a manipulation body that operates the movable contact, the switch device of the present invention is characterized in that:
an opening into which an external terminal can be inserted is formed in the housing;
each internal terminal has a contact touching part that is electrically connected to the movable contact and also has a terminal connecting part connectable to the external terminal inserted into the housing; and
the housing has at least one of a guide concave part and a guide protrusion that is guided toward an external base material to which the external terminal is fixed, and that extend in a direction in which the external terminal is inserted.

With the switch device of the present invention, the housing has a bottom part facing the attachment surface of an external base material to which the external terminal is fixed and also has two side parts erected from the attachment surface with the bottom part intervening therebetween. The opening is formed in the bottom part. Each of the two side parts has at least one of the guide concave part and guide protrusion.

With the switch device of the present invention, at least one of the guide concave part and guide protrusion is preferably provided between the opening and the manipulation body.

With the switch device of the present invention, the housing is formed by combing a first case and a second case together, and the guide protrusion is formed at a portion at which the first case and second case are combined together.

Alternatively, with the switch device of the present invention, the guide concave part is formed in one of the first case and second case.

Alternatively, with the switch device of the present invention, the housing may be formed by combing the first case and second case together, the guide protrusion may be formed at a portion at which the first case and second case are combined together, and the guide concave part may be formed in one of the first case and second case.

With the switch device of the present invention, the first case has the manipulation body and movable contact, the second case has the opening, and the terminal connecting part is disposed in the second case.

With the switch device of the present invention, one of the first case and second case preferably has a positioning structure that achieves positioning on the external base material to which the external terminal is fixed.

With the switch device of the present invention, the internal terminals are preferably incorporated with respect to the case having the positioning structure.

With the switch device of the present invention, the internal terminals are held by a terminal holding member, and the terminal holding member is positioned by abutting the case having the positioning structure.

With the switch device of the present invention, the terminal holding member preferably has a partition wall, and the terminal connecting parts are preferably disposed with the partition wall intervening between them.

With the switch device of the present invention, the positioning structure has a positioning boss protruding from the case toward the external base material.

Alternatively, the positioning structure has a rib disposed on the inner surface of the guide concave part.

With the switch device of the present invention, a fitting protrusion is formed on the housing so as to protrude in the direction in which the external terminal is inserted from the bottom part, the opening is formed in the fitting protrusion, and a sealing member made of an elastic material is attached to the outer circumference of the fitting protrusion.

In this case, preferably, the sealing member is vertically symmetric in the direction in which the external terminal is inserted.

A detecting apparatus according to the present invention is characterized in that: a guide support is provided on an external base material to which at least two external terminals are fixed, the guide support being oriented in a direction in which the external terminals extend; and
the switch device described above is disposed on the external base material, at least one of the guide concave part and guide protrusion is guided by the guide support, and the external terminals enter the interior of the housing from the opening and are connected to the terminal connecting parts.

A detecting apparatus according to the present invention is characterized in that: a positioning support and a guide support are provided on an external base material to which at least two external terminals are fixed, the guide support extending in the direction in which the external terminal s extend; and
the switch device described above is disposed on the external base material, at least one of the guide concave part and guide protrusion is guided by the guide support, the housing is positioned by fitting the positioning structure and positioning support to each other, and the external terminals enter the interior of the housing from the opening and are connected to the terminal connecting parts.

A detecting apparatus according to the present invention is characterized in that: a guide support is provided on an external base material to which at least two external terminals are fixed, the guide support being oriented in the direction in which the external terminals extends; and
the switch device described above is disposed on the external base material, at least one of the guide concave part and guide protrusion is guided by the guide support, the external terminals enter the interior of the housing from the opening and are connected to the terminal connecting parts, a wall surface enclosing the external terminals is formed on the outer base material, and the sealing member is attached between the fitting protrusion and the wall surface.

In the present invention, at least one of the guide concave part and guide protrusion that extend in a direction in which the external terminal is inserted is provided. Therefore, in the attachment of the switch device to the external base material to which the external terminals are fixed, the guide concave part or guide protrusion can be guided by the guide support provided on the external base material, so when the housing is attached, it is possible to reliably lead the external terminals to the interior of the housing.

### BRIEF DESCRIPTION OF THE DRAWINGS

Fig. 1 is a perspective view illustrating a process to attach a switch device to an external base material in a detecting apparatus in a first embodiment of the present invention;
Fig. 2 is a perspective view illustrating a state in which, in the detecting apparatus in the first embodiment of the present invention, the switch device has been attached to the external base material;
Fig. 3 is a partial perspective view illustrating the external base material of the detecting apparatus in the first embodiment of the present invention;
Fig. 4 is a perspective view of the switch device in the first embodiment of the present invention, as viewed from the bottom part of the housing of the switch device;
Fig. 5 is an exploded perspective view illustrating the switch device in the first embodiment of the present invention;
Fig. 6 is a partially exploded perspective view illustrating the internal terminals, terminal connection parts, and external terminals of the switch device in the first embodiment of the present invention;
Fig. 7 is a perspective view of the terminal connection parts of the switch apparatus;
Fig. 8A is a plan view of the terminal connection parts, and Fig. 8B is a side view of the terminal connection parts;
Fig. 9 is a side view illustrating a process to attach the switch device to the external base material;
Fig. 10 is a side view illustrating a process to attach the switch device to the external base material;
Fig. 11 is a side view illustrating a process to attach the switch device to the external base material;
Fig. 12 is a side view illustrating a state in which the switch device has been attached to the external base material;
Fig. 13 is a cross-sectional view of the switch device in the process in Fig. 11;
Fig. 14 is a cross-sectional view of the switch device in the process in Fig. 12;
Fig. 15A is a plan view illustrating a switch device in a second embodiment of the present invention, and Fig. 15B is a side view of the switch device; and
Fig. 16 is a side view illustrating a state in which, in a detecting apparatus in the second embodiment of the present invention, the switch device has been attached to the external base material.

### DESCRIPTION OF THE PREFERRED EMBODIMENTS

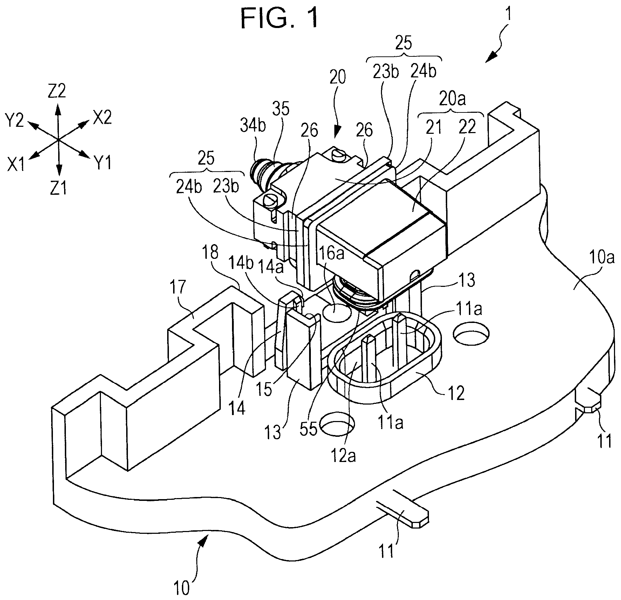

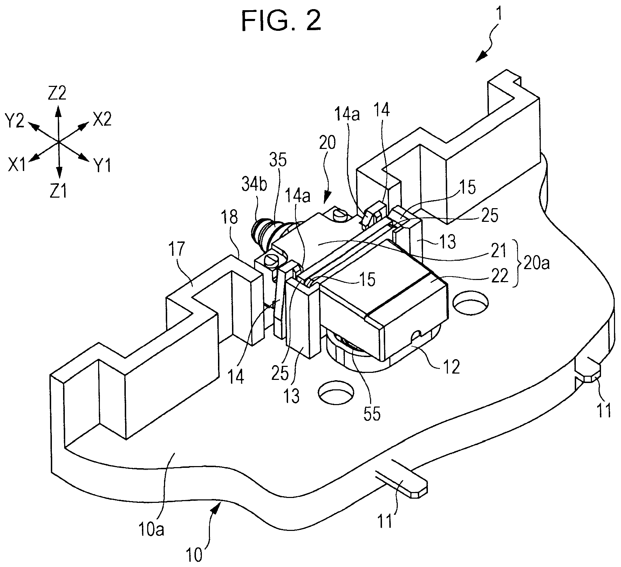

A detecting apparatus 1, illustrated in Figs. 1 and 2, in a first embodiment of the present invention includes an external base material 10 and a switch device 20 attached to the external base material 10. The external base material 10 is, for example, part of a door of an automobile. The switch device 20 detects, for example, whether the door is open or closed and whether the door is locked or unlocked. However, the external base material 10 is not limited to part of a door of an automobile.

The detecting apparatus 1 illustrated in Figs. 1 and 2 will take the X1-X2 direction as the right-and-left direction, the Y1-Y2 direction as the front-and-back direction, and the Z1-Z2 direction as the vertical direction.

The external base material 10 is made of a synthetic resin material. A pair of conductive plates 11 made of copper, a copper alloy, or the like are buried in the external base material 10. Part of each conductive plate 11 is erected perpendicularly from an attachment surface 10a in the Z2 direction, the attachment surface 10a being the upper surface of the external base material 10, the attachment surface 10a facing in the Z2 direction. The erected part is an external terminal 11a.

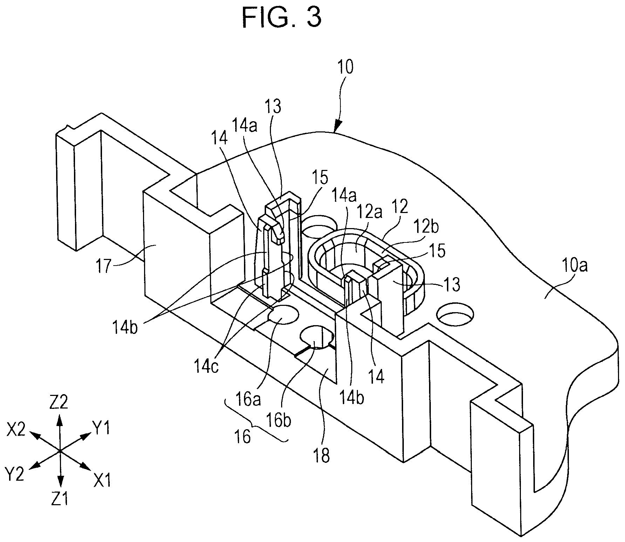

The external base material 10 in Fig. 3 is illustrated as viewed from the front with the conductive plates 11 eliminated.

As illustrated in Figs. 1 and 2, a tube 12 extending from the attachment surface 10a of the external base material 10 is integrally formed. The inner surface of the tube 12 forms a wall surface 12a, which encloses a pair of external terminals 11a. The wall surface 12a is ellipsoidala in a plan view. A concave part may be formed in the external base material 10, and the inner surface of the concave part may be the wall surface 12a.

The external base material 10 has a pair of first guide supports 13 and a pair of second guide supports 14, which are disposed closer to the front (Y2 side) than the tube 12 is. Each first guide support 13 and each second guide support 14 are formed integrally with the external base material 10 so as to be erected upward perpendicularly (in the Z2 direction) from the attachment surface 10a.

The pair of first guide supports 13 are disposed with a spacing left between them in the right-and-left direction (X1-X2 direction), and the pair of second guide supports 14 are also are disposed with a spacing left between them in the right-and-left direction. A guide support concave part 15, which extends in the vertical direction, is formed between the first guide support 13 on the X1 side and the relevant second guide support 14. Another guide support concave part 15 is also formed similarly on the X2 side. The guide support concave part 15 on the X1 side and the guide support concave part 15 on the X2 side are formed so that their concave parts face each other.

Each second guide support 14 functions as a guide support protrusion. As illustrated in Fig. 3, each second guide support (second guide support protrusion) 14 integrally has a hook 14a on the upper end so as to face in the Z2 direction. The hook 14a of the second guide support 14 disposed on the X1 side and the hook 14a of the second guide support 14 disposed on the X2 side protrude so as to face each other. A guide rib 14b extending vertically (in the Z1-Z2 direction) is formed on a side, of each second guide support 14, that faces in the Y1 direction, and another guide rib 14b is similarly formed on a side that faces in the Y2 direction. The lower part of each guide rib 14b is a wide-width part 14c having a large width dimension in the front-and-back direction.

As illustrated in Fig. 3, a positioning support 16 is provided on the attachment surface 10a of the external base material 10 between the pair of second guide supports 14 disposed in the right-and-left direction and closer to the front (Y2 side) than the second guide supports 14 are. The positioning support 16 is composed of paired positioning concave parts 16a and 16b. The positioning concave part 16a is a perfectly circular hole. The opening of the positioning concave part 16b is formed so that the width in the front-and-back direction (Y1-Y2 direction) matches the inner diameter dimension of the positioning concave part 16a in a perfectly circular shape. However, the positioning concave part 16b is slightly longer than the positioning concave part 16a in the right-and-left direction (X1-X2 direction).

A wall 17 is formed at the front (Y2 side) of the external base material 10. The wall 17 has a concave part 18 so that the switch device 20 is exposed toward the front (in the Y2 direction).

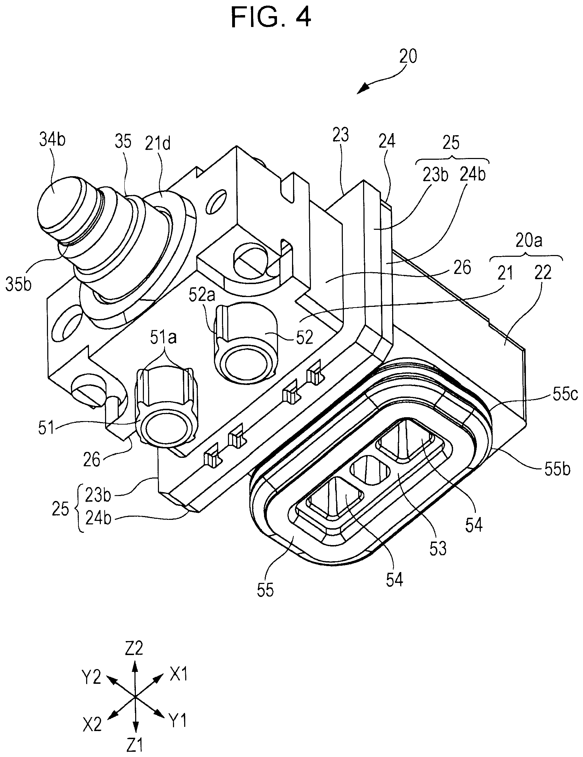

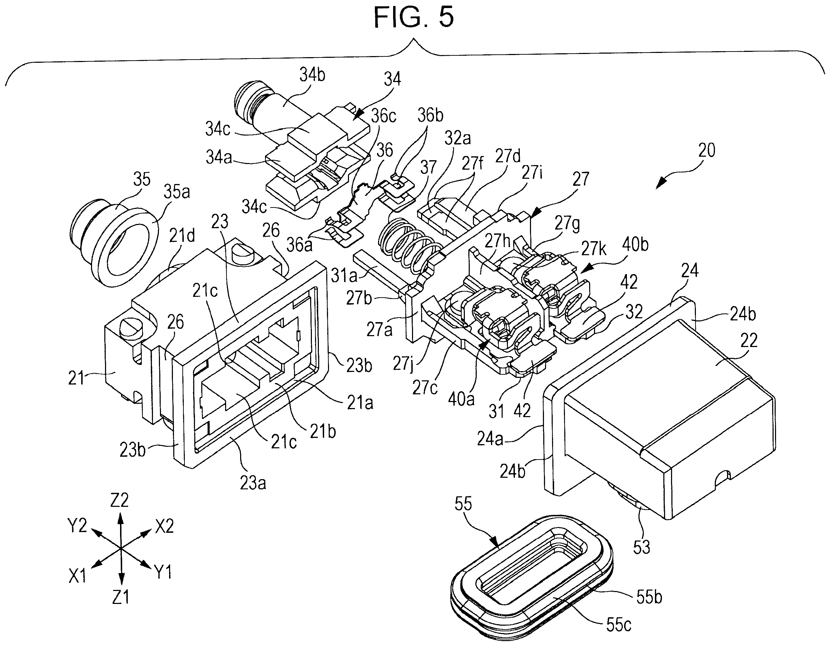

Fig. 4 is a perspective view of the switch device 20, as viewed from below on the front side. Fig. 5 is an exploded perspective view of the switch device 20, as viewed in the same direction as in Figs. 1 and 2.

The housing 20a of the switch device 20 is formed by combining a first case 21 and a second case 22. The first case 21 and second case 22 are made of a synthetic resin material such as polybutylene terephthalate (PBT) or the like. The first case 21 is disposed at the front (in the Y2 direction), and the second case 22 is disposed at the back (in the Y1 direction).

As illustrated in Figs. 4 and 5, a flange 23 is integrally formed at the back end of the first case 21. The flange 23 is formed so as to protrude from an outer surface of the first case 21 in the right-and-left direction (X1-X2 direction) and in the vertical direction (Z1-Z2 direction). The outside shape of the flange 23 is rectangular. A flange 24 is integrally formed at the front end of the second case 22. The flange 24 is formed so as to protrude from an outer surface of the second case 22 in the right-and-left direction (X1-X2 direction) and in the vertical direction (Z1-Z2 direction). The outside shape of the flange 24 is rectangular.

A joint surface 23a is formed on the flange 23 of the first case 21 so as to face backward (in the Y1 direction). A joint surface 24a is formed on the flange 24 of the second case 22 so as to face forward (in the Y2 direction). As illustrated in Fig. 4, the flange 23 and flange 24 are bonded together and are fixed by, for example, laser welding in a state in which the joint surface 23a and joint surface 24a are combined together face to face, so that the first case 21 and second case 22 are fixed to each other. This forms the housing 20a of the switch device 20. Preferably, the flange 23 and flange 24 are bonded together continuously by laser welding along their outer circumferences and are fixed to each other so that water droplets and the like do not enter the interior.

As illustrated in Fig. 4, a guide protrusion 25 is formed by a joint part between a flange side 23b that extends toward the X1 side, the flange side 23b being part of the flange 23 of the first case 21 and a flange side 24b that extends toward the X1 side, the flange side 24b being part of the flange 24 of the second case 22. Another guide protrusion 25 is similarly formed by a joint part between a flange side 23b that extends toward the X2 side and a flange side 24b that extends toward the X2 side. One guide protrusion 25 protrudes from the housing 20a toward the X1 side and extends. Another guide protrusion 25 protrudes from the housing 20a toward the X2 side and extends vertically (in the Z1-Z2 direction). That is, the housing 20a of the switch device 20 has a side facing in the X1 direction and a side facing in the X2 direction, and each guide protrusion 25 is provided so that these side extend vertically (in the Z1-Z2 direction).

As illustrated in Figs. 4 and 5, a guide concave part 26 is formed in a side of the first case 21, the side facing in the X1 direction, and another guide concave part 26 is formed in another side of the first case 21, the other side facing in the X2 direction. Each guide concave part 26 continuously extends vertically (in the Z1-Z2 direction) on the side of the housing 20a on the X1 or X2 side, whichever is appropriate. The width dimension of the opening of the each guide concave part 26 in the front-and-back direction (Y1-Y2 direction) is uniform over the entire length.

The Z1-Z2 direction, in which the guide protrusion 25 and guide concave part 26 extend, is a direction in which the switch device 20 is attached to the external base material 10 and is also a direction in which the external terminal 11a protrudes from the external base material 10.

The guide protrusion 25 and guide concave part 26 form a guide means used when the switch device 20 is attached to the attachment surface 10a of the external base material 10. The guide concave part 26 may be formed on the second case 22. Although only one of the guide protrusion 25 and guide concave part 26 may be provided, both the guide protrusion 25 and the guide concave part 26 are preferably provided as in this embodiment.

As illustrated in Fig. 5, a terminal holding member 27 is accommodated in the housing 20a of the switch device 20. The terminal holding member 27 is made of the same synthetic resin material as the first case 21 and second case 22.

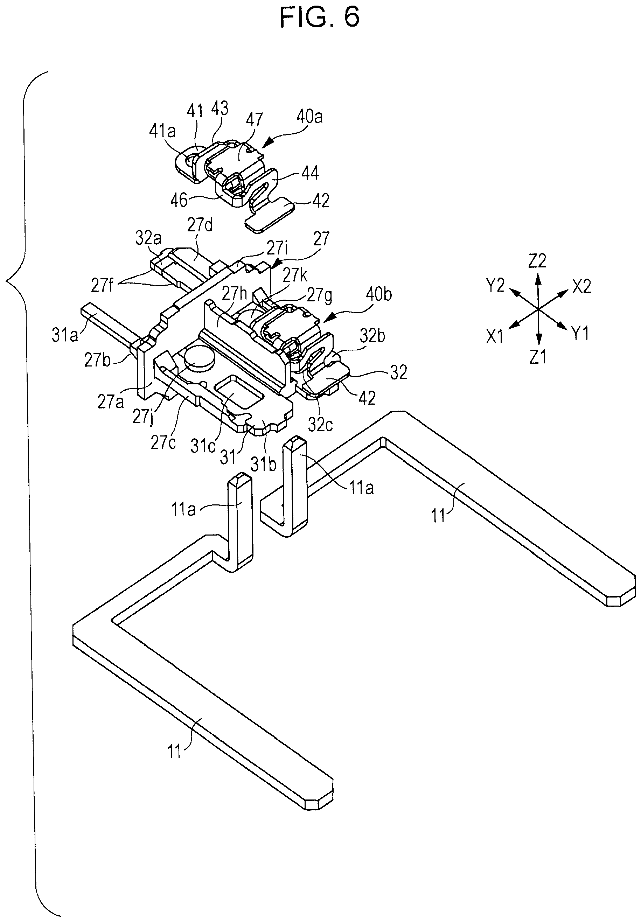

As illustrated in Figs. 5 and 6, a first internal terminal 31 and a second internal terminal 32 are held by the terminal holding member 27. The first internal terminal 31 and second internal terminal 32 are made of a conductive metal plate such as, for example, a phosphor bronze plate. The terminal holding member 27 is formed by a so-called insert molding method in which a synthetic resin material is injected in a state in which the first internal terminal 31 and second internal terminal 32 are held.

As illustrated in Figs. 5 and 6, the terminal holding member 27 has a positioning wall 27a parallel to the X-Z plane. At positions closer to the front (Y2 side) than the positioning wall 27a is, a contact-side holding part 27b is integrally formed on the X1 side, and a contact-side holding part 27d is integrally formed on the X2 side. At positions closer to the back (Y1 side) than the positioning wall 27a is, a connection-side holding part 27c is integrally formed on the X1 side, and a connection-side holding part 27g is integrally formed on the X2 side.

The first internal terminal 31 is disposed so as to pass through the positioning wall 27a in the front-and-back direction. The first internal terminal 31 is held by the contact-side holding part 27b on the front side and is held by the connection-side holding part 27c on the back side. The second internal terminal 32 is disposed so as to pass through the positioning wall 27a in the front-and-back direction. The second internal terminal 32 is held by the contact-side holding part 27d on the front side and is held by the connection-side holding part 27g on the back side. A partition wall 27h is integrally formed as part of the terminal holding member 27 so as to extend from the positioning wall 27a toward the back. The partition wall 27h is formed between the first internal terminal 31 and the second internal terminal 32 so as to be erected upward in parallel to the Y-Z plane. The partition wall 27h separates the first internal terminal 31 and second internal terminal 32 from each other.

As illustrated in Fig. 5, a concave part 21a is formed at the back end of the first case 21 so as to be enclosed by the flange 23. The internal bottom surface, facing the back (in the Y1 direction), of the concave part 21a is an abutting surface 21b.

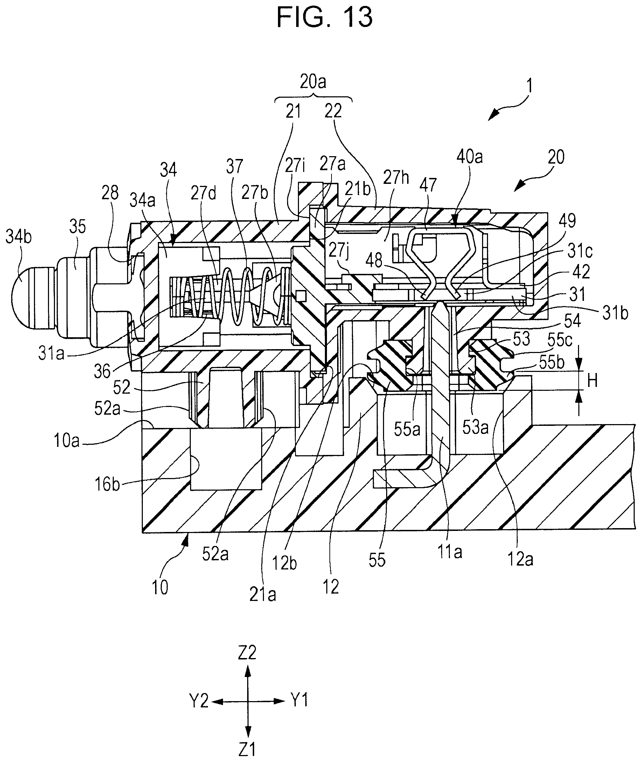

Fig. 13 is a cross-sectional view of the assembled switch device 20. The contact-side holding parts 27b and 27d of the terminal holding member 27 and the front parts of the first internal terminal 31 and second internal terminal 32, which are respectively held by the contact-side holding parts 27b and 27d, are inserted into the internal space of the first case 21. The front surface 27i of the positioning wall 27a abuts the butting surface 21b. In the concave part 21a, the positioning wall 27a is positioned and held so as not to move in the right-and-left direction (X1-X2 direction) and in the vertical direction (Z1-Z2 direction). The connection-side holding parts 27c and 27g of the terminal holding member 27 and the back parts of the first internal terminal 31 and second internal terminal 32, which are respectively held by the connection-side holding parts 27c and 27g, are inserted into the internal space of the second case 22. The first case 21 and second case 22 are fixed to each other with the positioning wall 27a interposed between the first case 21 and the second case 22.

When the front surface 27i of the positioning wall 27a of the terminal holding member 27 abuts the butting surface 21b of the first case 21, the first case 21 and terminal holding member 27 are positioned. Alternatively, when the positioning wall 27a is interposed between the first case 21 and the second case 22, the terminal holding member 27 is positioned with respect to both the first case 21 and the second case 22. Alternatively, the positioning wall 27a may be fixed to at least one of the first case 21 and second case 22 by, for example, laser welding.

A manipulation body 34 is accommodated in the first case 21 so as to be freely operated. The manipulation body 34 is made of a synthetic resin material. As illustrated in Fig. 5, the manipulation body 34 has a slider 34a and a manipulation axis 34b, which extends from the slider 34a toward the front, the slider 34a and manipulation axis 34b being formed integrally with each other. Sliding protrusions 34c, each of which extends in the front-and-back direction, are formed on the upper surface and lower surface of the slider 34a, one on each surface. Guide grooves 21c extending in the front-and-back direction are formed in the upper and lower inner surfaces of the first case 21, one in each inner surface. Each sliding protrusion 34c is slidably inserted into the relevant guide groove 21c. Accordingly, the manipulation body 34 is supported in the first case 21 so as to be movable in the front-and-back direction.

As illustrated in Fig. 13, a slide hole 28 is formed at the front of the first case 21 so as to pass through the first case 21 in the front-and-back direction. The manipulation axis 34b protrudes forward from the slide hole 28. A waterproof cover 35 is attached to the outer circumference of the manipulation axis 34b in front of the first case 21. The waterproof cover 35 is made of a water-resistant synthetic rubber material. As illustrated in Figs. 4 and 5, a matching part 21d protrudes from the front surface of the first case 21. The back end 35a of the waterproof cover 35 is attached to the inside of the matching part 21d. A hole 35b formed at the front of the waterproof cover 35 is placed tightly around the front outer circumference of the manipulation axis 34b. The waterproof cover 35 shields a clearance between the manipulation axis 34b and the slide hole 28 from the outside. The elastic force of the waterproof cover 35 enables the manipulation body 34 to move in the first case 21 in the front-and-back direction.

As illustrated in Fig. 5, a movable contact 36 is held by the slider 34a of the manipulation body 34. The movable contact 36 is formed from a low-resistance metal plate with a high spring property (elastic coefficient) made of, for example, a phosphor bronze material or a Corson copper alloy (Cu-Ni-Si alloy). The movable contact 36 integrally has a pair of first sliding pieces 36a facing vertically on the X1 side and a pair of second sliding pieces 36b facing vertically on the X2 side.

As illustrated in Figs. 5 and 13, in the first case 21, a return spring member 37 is provided between the central part 36c of the movable contact 36 and the positioning wall 27a of the terminal holding member 27. The return spring member 37 is a helical compression spring. Due to the elastic force of the return spring member 37, the manipulation body 34 is constantly urged forward (in the Y2 direction).

As illustrated in Figs. 5 and 6, the first internal terminal 31 has a contact touching part 31a, which is exposed from the contact-side holding part 27b in a portion closer to the front (Y2 side) than the positioning wall 27a is. Most of the portion, of the second internal terminal 32, that protrudes forward from the positioning wall 27a is buried in the contact-side holding part 27d. The contact-side holding part 27d has an insulative sliding part 27f extending in the front-and-back direction with a fixed thickness. Part of the top of the second internal terminal 32 is exposed from the insulative sliding part 27f. The exposed part forms a contact touching part 32a. The first sliding pieces 36a of the movable contact 36 interpose the contact touching part 31a of the first internal terminal 31 vertically therebetween. The second sliding pieces 36b selectively interpose the insulative sliding part 27f and the contact touching part 32a of the second internal terminal 32 vertically therebetween.

When the manipulation body 34 has been moved forward (in the Y2 direction) by the return spring member 37, the first sliding pieces 36a of the movable contact 36 touch the contact touching part 31a and the second sliding pieces 36b touch the contact touching part 32a. This causes the first internal terminal 31 and second internal terminal 32 to be electrically connected. When the manipulation body 34 is pushed backward (in the Y1 direction) against the return force of the return spring member 37, the first sliding pieces 36a remain in contact with the contact touching part 31a, but the second sliding pieces 36b touch the insulative sliding part 27f. This causes the first internal terminal 31 and second internal terminal 32 to be electrically disconnected.

As illustrated in Fig. 6, the first internal terminal 31 has a connection support 31b, which protrudes backward (in the Y1 direction) from the positioning wall 27a. The connection support 31b has an insertion part 31c, which is a rectangular hole passing through the connection support 31b vertically. Similarly, the second internal terminal 32 has a connection support 32b, which protrudes backward from the positioning wall 27a. The connection support 32b has an insertion part 32c, which is a rectangular hole passing through the connection support 32b vertically.

As illustrated in Figs. 5 and 6, a terminal connecting part 40a is fixed onto the connection support 31b of the first internal terminal 31, and a terminal connecting part 40b is fixed onto the connection support 32b of the second internal terminal 32. The terminal connecting part 40a and terminal connecting part 40b have the same structure and the same dimensions. The terminal connecting part 40a and terminal connecting part 40b are made of a plate material that is thinner and easier to warp than the first internal terminal 31 and second internal terminal 32, such as a phosphor bronze material, a Corson copper alloy, or another low-resistance metal material with a high spring property (elastic coefficient). The terminal connecting part 40a and terminal connecting part 40b may be made of the same type of metal material as the first internal terminal 31 and second internal terminal 32, or may be made of an appropriate combination of different metal materials.

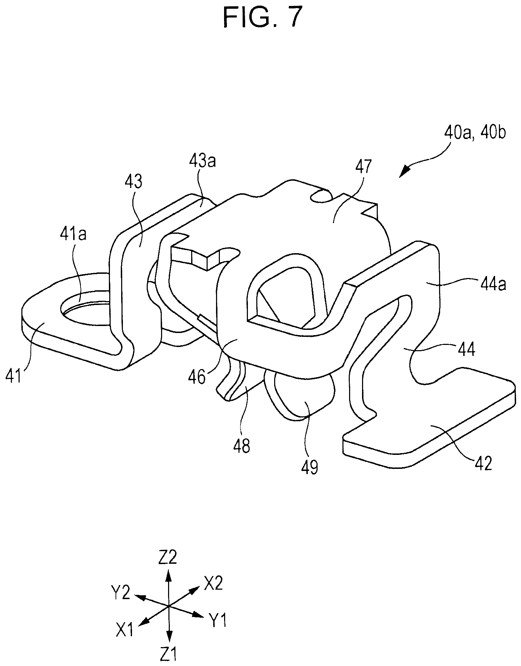

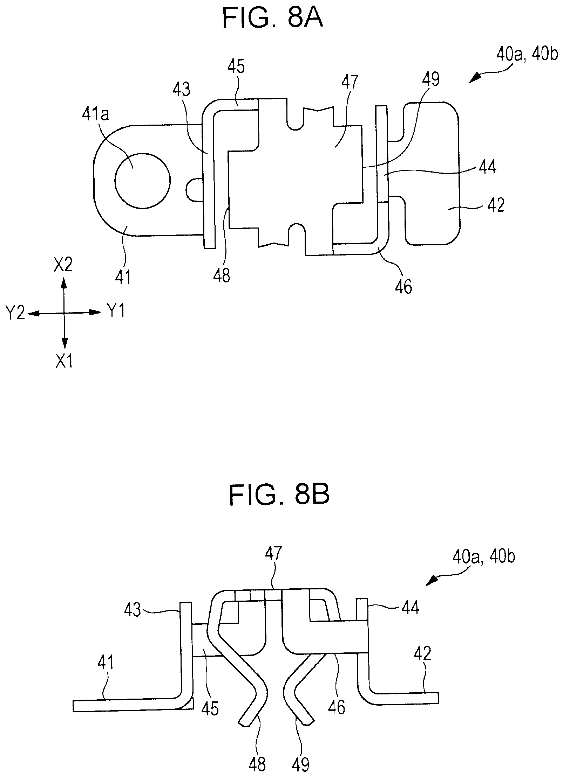

The terminal connecting parts 40a and 40b are enlarged in Fig. 7 and Figs. 8A and 8B.

The terminal connecting parts 40a and 40b each have a first fixing part 41 and a second fixing part 42. The first fixing part (first fixing piece) 41 and second fixing part (second fixing piece) 42 are disposed with a spacing left between them in the front-and-back direction (Y1-Y2 direction). The first fixing part 41 has a fixing hole 41a.

A first support elastic piece 43 is formed so as to be bent upward from the first fixing part 41. A first support elastic piece 44 is formed so as to be bent upward from the second fixing part 42. The first support elastic piece 43 and first support elastic piece 44 face each other substantially in parallel with a spacing left between them in the front-and-back direction. The first support elastic piece 43 has a bent part 43a, and the first support elastic piece 44 has a bent part 44a. The bent parts 43a and 44a are curved substantially in a U-shape in a X-Z plane.

As illustrated in Fig. 7 and Figs. 8A and 8B, a second support elastic piece 45, which is bent from the X2 side in the Y1 direction, is formed so as to be contiguous to the first support elastic piece 43, and a second support elastic piece 46, which is bent from the X1 side in the Y2 direction, is formed so as to be contiguous to the first support elastic piece 44. A contact base 47 is provided so as to be contiguous to the top of the second support elastic piece 45 and to the top of the second support elastic piece 46. The contact base 47 has a contact piece 48, on the Y2 side, that extends downward and is bent, and also has a contact piece 49, on the Y1 side, that extends downward is bent, the contact pieces 48 and 49 being paired.

As illustrated in Fig. 6, the connection support 31b of the first internal terminal 31 has a hole at a position closer to the front than the insertion part 31c is. Part of the synthetic resin material that forms the terminal holding member 27 protrudes upward from this hole, forming a fixing protrusion 27j. In the attachment of the terminal connecting part 40a onto the connection support 31b of the first internal terminal 31, the fixing protrusion 27j is inserted into the fixing hole 41a in the first fixing part 41, after which the top of the fixing protrusion 27j is heated and crushed to form a so-called thermal caulking structure. Then, the terminal connecting part 40a is fixed. The fixing protrusion 27j illustrated in Fig. 6 has the same size and the same thickness as the one that has been thermally caulked.

After the thermal caulking structure has been formed, a portion at which the second fixing part 42 of the terminal connecting part 40a is placed on the connection support 31b is illuminated by a laser beam to spot-weld the connection support 31b and second fixing part 42 together and fix them to each other. This can enhance the reliability of the electrical connection between the first internal terminal 31 and the terminal connecting part 40a. Welding may be resistance welding. For example, spot-welding may be performed at a plurality of points in the X1-X2 direction in Fig. 6. When spot-welding is performed at a plurality of points, the reliability of the electrical connection can be further enhanced.

The terminal holding member 27 also has another fixing protrusion 27k formed at a portion at which the connection support 32b of the second internal terminal 32 is held. When the terminal connecting part 40b is be mounted on the connection support 32b, the fixing protrusion27k is inserted into the fixing hole 41a in the first fixing part 41 of the terminal connecting part 40b and a thermal caulking structure is formed, in the same way as described above. The connection support 32b and the second fixing part 42 of the terminal connecting part 40b are spot-welded together to make an electrical connection between the second internal terminal 32 and the terminal connecting part 40b.

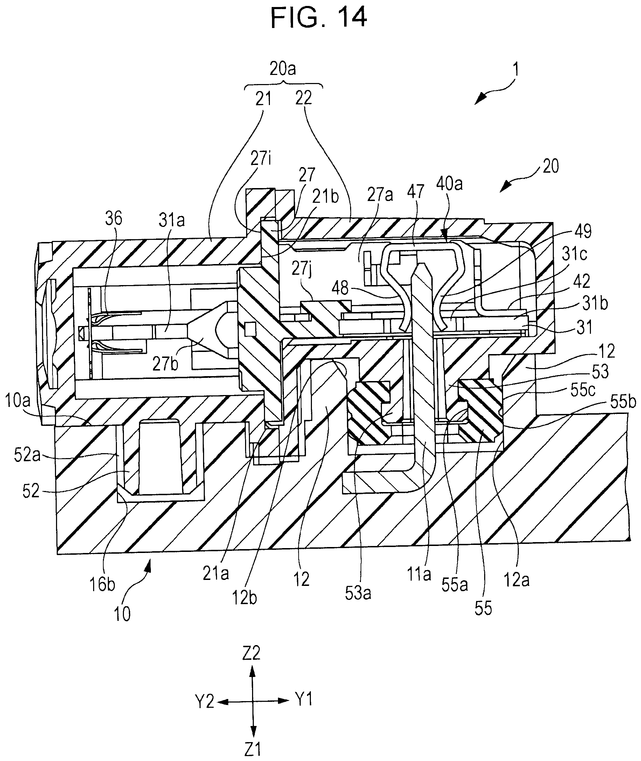

As illustrated in Figs. 13 and 14, after the terminal connecting part 40a has been fixed onto the connection support 31b of the first internal terminal 31, the paired contact pieces 48 and 49 formed as part of the terminal connecting part 40a are positioned above the insertion part 31c with their lower ends inserted into the interior of the insertion part 31c formed in the connection support 31b. Similarly, the paired contact pieces 48 and 49 formed as part of the terminal connecting part 40b are positioned above the insertion part 32c with their lower ends inserted into the interior of the insertion part 32c formed in the connection support 32b.

Fig. 4 illustrates the switch device 20 viewed from below.

A pair of positioning bosses 51 and 52 are integrally formed on the bottom part of the first case 21. The pair of positioning bosses 51 and 52 form a positioning structure. The positioning bosses 51 and 52 are in a cylindrical shape and have the same diameter. On the outer circumferential surface of the positioning boss 51, pressure contact ribs 51a extending vertically (in the Z1-Z2 direction) are integrally formed at a plurality of points. Similarly, on the outer circumferential surface of the positioning boss 52, pressure contact ribs 52a are integrally formed at a plurality of points.

As illustrated in Figs. 4 and 13, a fitting protrusion 53 protruding downward is integrally formed at the bottom part of the second case 22. The fitting protrusion 53 is formed in an area elongated in the X1-X2 direction. A pair of openings 54 are formed in the fitting protrusion 53. As illustrated in Fig. 13, each opening 54 communicates with the internal space of the second case 22.

In the interior of the second case 22, each of the insertion part 31c formed in the connection support 31b of the first internal terminal 31, and the insertion part 32c formed in the connection support 32b of the second internal terminal 32 faces the relevant opening 54.

As illustrated in Fig. 4, a sealing member 55 is attached to the circumference of the fitting protrusion 53 disposed at the bottom part of the second case 22. The sealing member 55 is made of a waterproof synthetic rubber material. As illustrated in Fig. 13, a flange 53a, which protrudes toward the outer circumference of the fitting protrusion 53, is provided at its lower end. A fitting concave part 55a is circumferentially formed along the inner surface of the sealing member 55. When the fitting concave part 55a is fitted to the flange 53a, the sealing member 55 is attached in such a way that the sealing member 55 does not easily come off the fitting protrusion 53.

A lower elongated protrusion 55b and an upper elongated protrusion 55c are formed integrally with each other on the outer circumferential surface of the sealing member 55. The lower elongated protrusion 55b and upper elongated protrusion 55c are formed along the entire circumference of the sealing member 55. As illustrated in Fig. 13, when the sealing member 55 is attached to the fitting protrusion 53, a lower portion, with a height of H, of the sealing member 55 further protrudes downward relative to the lower end of the fitting protrusion 53. At least part of the lower elongated protrusion 55b is formed in an area indicated by the height H.

The shape of the sealing member 55 is vertically symmetric in the Z1-Z2 direction. Therefore, even if any side of the sealing member 55 in the vertical direction is oriented upward or downward during assembling, the sealing member 55 can be attached normally.

Next, processes to attach the switch device 20 in the detecting apparatus 1 and the operation of the detecting apparatus 1 will be described.

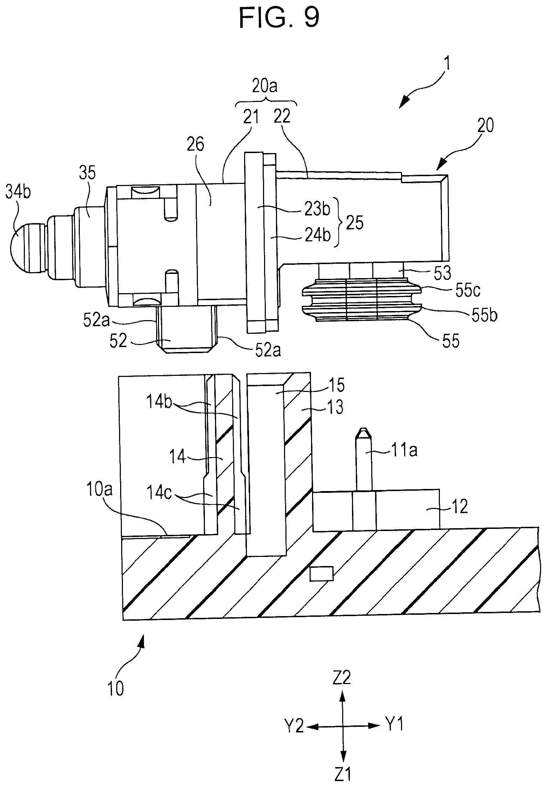

Figs. 9 to 12 illustrate processes to attach the switch device 20 to the external base material 10.

The switch device 20 is attached to the attachment surface 10a of the external base material 10 in the Z1 direction. With the switch device 20, the positioning bosses 51 and 52, which function as a positioning structure, are formed at the bottom part of the first case 21, and the openings 54, which lead the pair of external terminals 11a to the interior of the housing 20a, are also formed at the bottom part of the second case 22. It is difficult to check the positioning bosses 51 and 52 and the openings 54 by viewing them from above the switch device 20.

Since the guide protrusion 25 and guide concave part 26 are provided on the sides of the housing 20a on both the X1 and X2 sides, however, when the switch device 20 is viewed from above (from the Z2 side), the guide protrusion 25 and guide concave part 26 can be checked from above. The pair of first guide supports 13 and the pair of second guide supports 14, disposed on the external base material 10, can also be easily checked from above. Therefore, in the incorporation of the switch device 20 into a limited space on the external base material 10 as illustrated in Fig. 1, when the guide protrusion 25 and guide concave part 26 are respectively mated to the guide support concave part 15 and second guide support 14, the reference in incorporation work can be easily checked.

As illustrated in Figs. 1, 9, and 10, in the attachment of the switch device 20 to the external base material 10, the guide protrusion 25 provided on each of the sides of the housing 20a on the X1 and X2 sides is inserted, from above, into the relevant guide support concave part 15 formed between the first guide support 13 and the second guide support 14 provided on the external base material 10. Similarly, the guide concave part 26 provided on each of the sides of the housing 20a on the X1 and X2 sides is placed, from above, on the relevant second guide support 14, which is a guide support protrusion. This enables the switch device 20 to be guided toward the attachment position on the external base material 10.

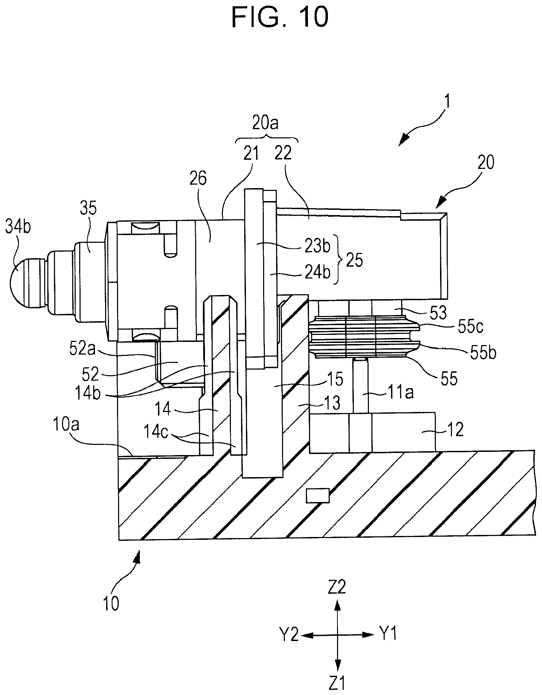

As illustrated in Fig. 10, at the beginning of the mating of the guide protrusion 25 and guide concave part 26 of the switch device 20 to the guide support concave part 15 and second guide support 14, the positioning bosses 51 and 52 provided on the first case 21 are separated from the external base material 10 and the openings 54 formed in the second case 22 are also separated from the external terminal 11a fixed to the external base material 10.

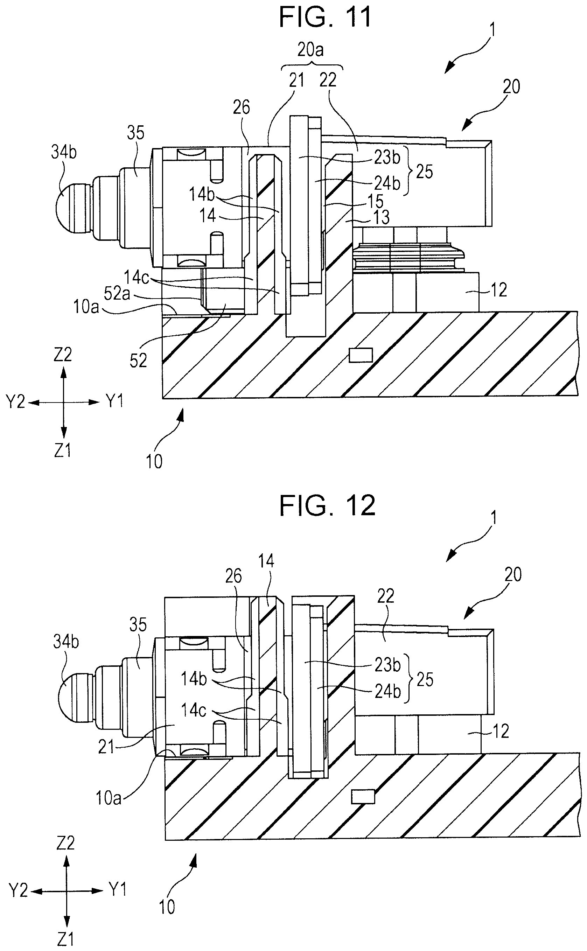

When the switch device 20 is then lowered to the position indicated in Fig. 11, each external terminal 11a enters the interior of the relevant opening 54 in the second case 22. At this point in time, however, the contact pieces 48 and 49 of each of the terminal connecting parts 40a and 40b in the second case 22 are still separated a little from the external terminal 11a, as illustrated in Fig. 13.

When the switch device 20 is further pressed in the Z1 direction, the positioning bosses 51 and 52 respectively enter the interiors of the positioning concave parts 16a and 16b formed in the external base material 10. As illustrated in Fig. 3, the positioning concave part 16a on the X2 side is perfectly circular, and the positioning concave part 16b on the X1 side is formed so as to be slightly long in the X1-X2 direction. Therefore, the position at which the switch device 20 is to be disposed on the external base material 10 is determined with respect to the concave and convex fitting part between the positioning concave part 16a and the positioning boss 51 disposed on the X2 side. The positioning boss 51, which has the pressure contact ribs 51a, is inserted into the positioning concave part 16a without a clearance. The positioning boss 52, which has the pressure contact rib 52a protruding in the Y1-Y2 direction, is positioned and attached in the positioning concave part 16b without a clearance in the Y1-Y2 direction.

When the switch device 20 is further pressed in the state in Figs. 11 and 13, the positioning bosses 51 and 52 respectively enter the positioning concave parts 16a and 16b, immediately after which the pair of external terminals 11a enter the clearance between the pair of contact pieces 48 and 49 of the terminal connecting parts 40a and terminal connecting part 40b in the second case 22. The hook 14a formed as part of the second guide support 14 of the external base material 10 is engaged to the upper surface of the first case 21, fixing the switch device 20 on the external base material 10. This completes the attachment of the switch device 20 as illustrated in Figs. 12 and 14.

As illustrated in Figs. 13 and 14, the front surface 27i of the positioning wall 27a of the terminal holding member 27 abuts the butting surface 21b of the first case 21 to position the terminal holding member 27 with respect to the first case 21. In addition, the terminal connecting part 40a is positioned and fixed to the first internal terminal 31 by the fixing protrusion 27j, and the terminal connecting part 40b is positioned and fixed to the second internal terminal 32 by the fixing protrusion 27k, the first internal terminal 31 and second internal terminal 32 being held to the terminal holding member 27 by an insert molding method. Therefore, the positions of the terminal connecting parts 40a and 40b relative to the positioning bosses 51 and 52 formed in the first case 21 are highly precisely determined.

As described above, immediately after the positioning boss 51 has entered the positioning concave part 16a and the positioning boss 52 has entered positioning concave part 16b, each of the pair of external terminals 11a enters a clearance between the contact pieces 48 and 49 of one of the two terminal connection parts 40a and 40b. Since the relative positions between the positioning boss 51 and the terminal connecting part 40a and between the positioning boss 52 and the terminal connecting part 40b are highly precisely determined, it is possible to reliably insert each of the pair of external terminals 11a into the clearance between the contact pieces 48 and 49 of one of the two terminal connection parts 40a and 40b.

As illustrated in Fig. 4, the fitting protrusion 53 is formed on the second case 22, the openings 54 are formed in the fitting protrusion 53, and the sealing member 55 is attached to the outer circumference of the fitting protrusion 53. Therefore, when the switch device 20 is pressed against to the attachment surface 10a of the external base material 10 as illustrated in Figs. 13 and 14, the sealing member 55 enters the interior of the tube 12 formed in the external base material 10.

The lower elongated protrusion 55b and upper elongated protrusion 55c are formed on the outer circumferential surface of the sealing member 55. The outside dimensions of the lower elongated protrusion 55b and upper elongated protrusion 55c are larger than the inner dimension of the wall surface 12a, which is the inner surface of the tube 12. However, since the lower portion, with the height of H, of the sealing member 55, the lower portion being the lower elongated protrusion 55b, further protrudes downward relative to the lower end of the fitting protrusion 53, as illustrated in Fig. 13, the sealing member 55 is likely to be deformed toward the center at the portion with the height of H. The upper portion of the wall surface 12a forms a tapered surface 12b, the dimension of which is gradually increased.

Therefore, when the switch device 20 is pressed in the Z1 direction, the lower elongated protrusion 55b is guided by the tapered surface 12b. This portion becomes likely to be contracted toward the center. This enables the lower elongated protrusion 55b to easily enter the space inside of the wall surface 12a. After that, an upper portion, of the sealing member 55, that internally has the fitting protrusion 53 enters the space inside of the wall surface 12a, so the lower elongated protrusion 55b and upper elongated protrusion 55c are compressed and placed in tight contact with the wall surface 12a. Therefore, it is possible to reliably seal a portion at which the fitting protrusion 53 is attached to the wall surface 12a.

That is, although the sealing member 55 is disposed at the bottom part of the second case 22 and the position of the sealing member 55 cannot thereby be visually checked from above, if the switch device 20 is attached to the attachment surface 10a of the external base material 10 in such a way that the guide protrusion 25 and guide concave part 26 are respectively combined with the guide support concave part 15 and second guide support 14 from above, it is possible to easily insert the sealing member 55 into the space inside of the wall surface 12a.

As illustrated in Fig. 14, the interior of the housing 20a can be sealed with the 20 attached to the external base material 10, so it is possible to prevent moisture and oil from entering the interior of the housing 20a. With the switch device 20, the positioning wall 27a of the terminal holding member 27 is interposed at the boundary between the first case 21 and the second case 22. The positioning wall 27a completely separates the internal space of the first case 21 and the internal space of the second case 22 from each other. More preferably, if the flange 23 of the first case 21 and the flange 24 of the second case 22 are bonded by being continuously welded along their outer circumferences, contact sliding parts in the first case 21 between the movable contact 36 and the first internal terminal 31 and between the movable contact 36 and the second internal terminal 32 can be placed in a sealed space, so it is possible to prevent moisture, oil, and the like from entering the space.

The internal space of the second case 22 is also completely isolated from the outside by a sealing structure formed by placing the sealing member 55 in tight contact with the wall surface 12a, so it is possible to prevent moisture, oil, and the like from entering the internal space.

As illustrated in Fig. 7 and Figs. 8A and 8B, since the first support elastic pieces 43 and 44 of the terminal connecting parts 40a and 40b are elastically deformable in the front-and-back direction (Y1-Y2 direction), the contact base 47 having the contact pieces 48 and 49 can move in the front-and-back direction (Y1-Y2 direction). That is, the contact pieces 48 and 49 can move in the front-and-back direction (Y1-Y2 direction), in which they hold the external terminal 11a. Therefore, when the external terminal 11a is inserted into the clearance between the contact pieces 48 and 49 during the attachment of the switch device 20 to the external base material 10, the contact pieces 48 and 49 can hold the external terminal 11a so as to follow the external terminal 11a while moving in the front-and-back direction, in which the contact pieces 48 and 49 hold the external terminal 11a. After having been held by the contact pieces 48 and 49, the external terminal 11a remains held by them from the front-and-back direction with even forces.

The contact base 47 having the contact pieces 48 and 49 can further move in the right-and-left direction (X1-X2 direction) due to the elastic deformation of the second support elastic pieces 45 and 46. Therefore, when the contact pieces 48 and 49 hold the external terminal 11a, they can also follow the right-and-left movement of the external terminal 11a.

External vibration may be exerted on the detecting apparatus 1 while the detecting apparatus 1 into which the switch device 20 has been incorporated is being used, and the switch device 20 and external base material 10 may thereby move relatively. Even in this case, since the first support elastic pieces 43 and 44 and second support elastic pieces 45 and 46 of the terminal connecting parts 40a and 40b elastically deform, the contact pieces 48 and 49 can follow the relative vibration of the external terminal 11a.

As illustrated in Figs. 13 and 14, the second case 22 of the switch device 20 has the openings 54 in the fitting protrusion 53 formed at the bottom part, the openings 54 being long in the vertical direction (Z1-Z2 direction). In the second case 22, the insertion part 31c of the first internal terminal 31 faces the interior of the relevant opening 54, and the insertion part 32c of the second internal terminal 32 also faces the interior of the relevant opening 54. The contact pieces 48 and 49, which are part of each of the terminal connecting part 40a included in the first internal terminal 31 and the terminal connecting part 40b included in the second internal terminal 32, are disposed opposite to the relevant opening 54.

In the second case 22, the distance from the lower end of each opening 54 to the contact pieces 48 and 49 is long, and the insertion part 31c or insertion part 32c, whichever is appropriate, is present therebetween. Therefore, even if, in the switch device 20 before it is attached to the external base material 10, a foreign material enters the opening 54 from the outside, a force with which deformation is caused and the like are not easily applied to the contact pieces 48 and 49.

The internal space of the second case 22 is divided into two by the partition wall 27h of the terminal holding member 27 in the X1-X2 direction. Therefore, the terminal connecting part 40a fixed to the first internal terminal 31 and the terminal connecting part 40b fixed to the second internal terminal 32 can be placed in different spaces. Therefore, even when the second case 22 is made compact, a short-circuit does not occur between the terminal connecting part 40a and the terminal connecting part 40b, which would otherwise be caused when they come into contact with each other.

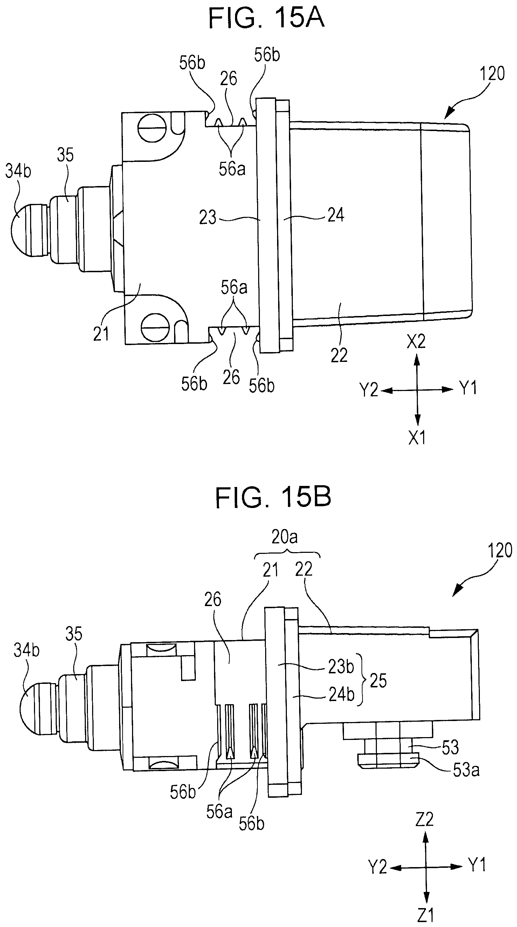

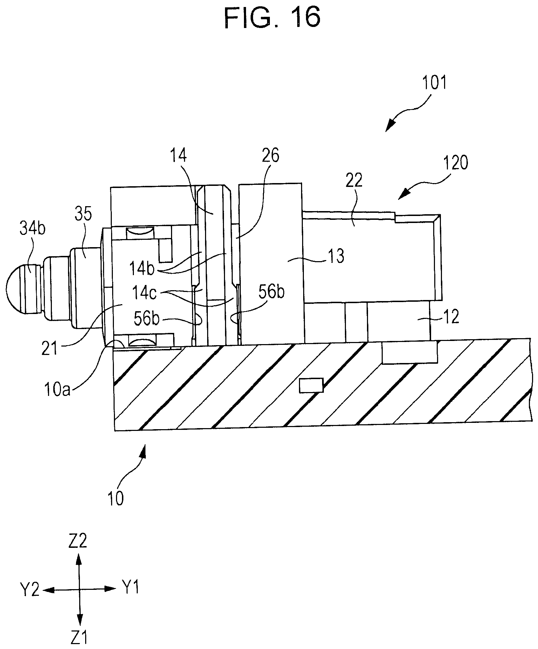

Figs. 15A and 15B illustrate a switch device 120 in a second embodiment of the present invention. Fig. 16 illustrates a detecting apparatus 101, in the second embodiment, with the switch device 120 attached to the external base material 10. Structural parts, in the second embodiment, that have the same functions as in the first embodiment will be assigned the same reference characters, and detailed descriptions will be omitted.

In the housing 20a of the switch device 120 in the second embodiment, the first case 21 lacks the positioning bosses 51 and 52. Instead, as illustrated in Figs. 15A and 15B, the switch device 120 in the second embodiment has pressure contact ribs 56a and 56b in the guide concave part 26 as a positioning structure. Two pressure contact ribs 56a are formed on the inner surface, facing in the X1 direction, of the guide concave part 26 on the X1 side so as to extend in the vertical direction. Similarly, other two pressure contact ribs 56a are formed on the inner surface, facing in the X2 direction, of the guide concave part 26 on the X2 side. Two pressure contact ribs 56b are formed on the inner end surfaces facing in the front-and-back direction (Y1-Y2 direction) of each guide concave part 26 so as to extend in the front-and-back direction, one pressure contact rib 56b on one inner end surface. As illustrated in Fig. 15B, the pressure contact ribs 56a and 56b are provided only in the lower portion in the guide concave part 26.

The external base material 10 to which the switch device 120 is attached is the same as the external base material 10 that has been illustrated in Fig. 3 in the first embodiment. However, the positioning concave parts 16a and 16b are unnecessary.

In processes to attach the switch device 120 to the external base material 10, the guide protrusion 25 and guide concave part 26 formed in the housing 20a are respectively mated to the guide support concave part 15 and second guide support 14 formed in the external base material 10 so as to be guided, after which the switch device 120 is pressed downward, that is, toward the attachment surface 10a of the external base material 10, as in the attachment processes, in the first embodiment, illustrated in Figs. 9 to 11. When the switch device 120 is pressed downward from the position illustrated in Fig. 11 to the position illustrated in Fig. 12 as in the first embodiment, each pressure contact rib 56a formed in the guide concave part 26 comes into pressure contact with the opposing surface of the second guide support 14, and each pressure contact rib 56b comes into pressure contact with the relevant wide-width part 14c, which is the lower portion of the relevant guide rib 14b, as illustrated in Fig. 16. As a result, the switch device 120 is positioned on the external base material 10. Then, the hook 14a formed as part of the second guide support 14 is engaged to the upper surface of the first case 21.

In the second embodiment as well, the switch device 120 is guided by the first guide supports 13 and second guide supports 14 and is led to the attachment surface 10a of the external base material 10. The switch device 120 is then positioned by the pressure contact ribs 56a and 56b constituting a positioning structure at the final stage of the processes to press the switch device 120 downward.

In the present invention, the terminal connecting part 40a may be integrally formed on the first internal terminal 31 and the terminal connecting part 40b may be integrally formed on the second internal terminal 32, instead of being attached as separate parts.

## Claims

1. A switch device comprising:
a housing (20a);
at least two internal terminals (31, 32) provided in the housing (20a);
a movable contact (36); and
a manipulation body (34) that operates the movable contact (36),
**characterized in that**
an opening (54) into which an external terminal (11a) is insertable is formed in the housing (20a),
each internal terminal (31) has a contact touching part (31a) that is electrically connected to the movable contact (36) and also has a terminal connecting part (40a) connectable to the external terminal (11a) inserted into the housing (20a), and
the housing (20a) has at least one of a guide concave part (26) and a guide protrusion (25) that is guided toward an external base material (10) to which the external terminal (11a) is fixed, and that extend in a direction in which the external terminal (11a) is inserted.

2. The switch device according to Claim 1, wherein:
the housing (20a) has a bottom part facing an attachment surface (10a) of the external base material (10) to which the external terminal (11a) is fixed and also has two side parts erected from the attachment surface (10a) with the bottom part intervening between the two side parts;
the opening (54) is formed in the bottom part; and
each of the two side parts has at least one of the guide concave part (26) and the guide protrusion (25).

3. The switch device according to Claim 1 or 2, wherein at least one of the guide concave part (26) and the guide protrusion (25) is provided between the opening (54) and the manipulation body (34).

4. The switch device according to any one of Claims 1 to 3, wherein:
the housing (20a) is formed by combining a first case (21) and a second case (22) together; and
the guide protrusion (25) is formed at a portion at which the first case (21) and the second case (22) are combined together.

5. The switch device according to Claim 4, wherein the guide concave part (26) is formed in one of the first case (21) and the second case (22).

6. The switch device according to Claim 4, wherein:
the housing (20a) is formed by combining the first case (21) and the second case (22) together;
the guide protrusion (25) is formed at a portion at which the first case (21) and the second case (22) are combined together; and
the guide concave part (26) is formed in one of the first case (21) and the second case (22).

7. The switch device according to any one of Claims 4 to 6, wherein:
the first case (21) has the manipulation body (34) and the movable contact (36);
the second case (22) has the opening (54); and
the terminal connecting part (40a) is disposed in the second case (22).

8. The switch device according to any one of Claims 4 to 7, wherein one of the first case (21) and the second case (22) has a positioning structure that achieves positioning on the external base material (10) to which the external terminal (11a) is fixed.

9. The switch device according to Claim 8, wherein the internal terminals (31, 32) are incorporated with respect to the case having the positioning structure.

10. The switch device according to Claim 9, wherein:
the internal terminals (31, 32) are held by a terminal holding member (27); and
the terminal holding member (27) is positioned by abutting the case having the positioning structure.

11. The switch device according to Claim 10, wherein:
the terminal holding member (27) has a partition wall (27h); and
the terminal connecting parts (40a, 40b) are disposed with the partition wall (27h) intervening between the terminal connecting parts (40a, 40b).

12. The switch device according to any one of Claims 8 to 11, wherein the positioning structure has a positioning boss (51) protruding from the case toward the external base material (10).

13. The switch device according to any one of Claims 8 to 11, wherein the positioning structure has a rib (56a) disposed on an inner surface of the guide concave part (26).

14. The switch device according to any one of Claims 1 to 13, wherein:
a fitting protrusion (53) is formed on the housing (20a) so as to protrude in the direction in which the external terminal (11a) is inserted from the bottom part;
the opening (54) is formed in the fitting protrusion (53); and
a sealing member (55) made of an elastic material is attached to an outer circumference of the fitting protrusion (53).

15. The switch device according to Claim 14, wherein the sealing member (55) is vertically symmetric in the direction in which the external terminal (11a) is inserted.

16. A detecting apparatus comprising:
the switch device (20) according to any one of Claims 1 to 15;
an external base material (10);
at least two external terminals (11a) fixed to the external base material (10); and
a guide support (13) formed on the external base material (10) so as to be oriented in a direction in which the external terminals (11a) extend; wherein
the switch device (20) is disposed on the external base material (10),
at least one of the guide concave part (26) and the guide protrusion (25) is guided by the guide support (13), and
the external terminals (11a) enter an interior of the housing (20a) from the opening (54) and are connected to the terminal connecting parts (40a, 40b).

17. A detecting apparatus comprising:
the switch device (20) according to any one of Claims 8 to 13;
an external base material (10);
at least two external terminals (11a) fixed to the external base material (10);
a positioning support (16) formed in the external base material (10); and
a guide support (13) formed on the external base material (10) so as to be oriented in a direction in which the external terminals (11a) extend; wherein
the switch device (20) is disposed on the external base material (10),
at least one of the guide concave part (26) and the guide protrusion (25) is guided by the guide support (13),
the housing (20a) is positioned by fitting the positioning structure and the positioning support (16) to each other, and
the external terminals (11a) enter an interior of the housing (20a) from the opening (54) and are connected to the terminal connecting parts (40a, 40b).

18. A detecting apparatus comprising:
the switch device (20) according to Claim 14 or 15;
an external base material (10);
at least two external terminals (11a) fixed to the external base material (10); and
a guide support (13) formed on the external base material (10) so as to be oriented in a direction in which the external terminals (11a) extend; wherein
the switch device (20) is disposed on the external base material (10),
at least one of the guide concave part (26) and the guide protrusion (25) is guided by the guide support (13),
the external terminals (11a) enter an interior of the housing (20a) from the opening (54) and are connected to the terminal connecting parts (40a, 40b),
a wall surface enclosing the external terminals (11a) is formed on the outer base material, and
the sealing member (55) is attached between the fitting protrusion (53) and the wall surface.

## Patentansprüche

1. Schaltervorrichtung, aufweisend:
ein Gehäuse (20a);
mindestens zwei interne Anschlüsse (31, 32), die in dem Gehäuse (20a) vorgesehen sind;
einen beweglichen Kontakt (36); und
einen Betätigungskörper (34), der den beweglichen Kontakt (36) betätigt,
**dadurch gekennzeichnet,**
**dass** in dem Gehäuse (20a) eine Öffnung (54) gebildet ist, in die sich ein externer Anschluss (11a) einsetzen lässt,
**dass** jeder interne Anschluss (31) ein Kontaktberührungsteil (31a) aufweist,
das mit dem beweglichen Kontakt (36) elektrisch verbunden ist, und ferner ein Anschlussverbindungsteil (40a) aufweist, das mit dem in das Gehäuse (20a) eingesetzten externen Anschluss (11a) verbindbar ist, und
**dass** das Gehäuse (20a) mindestens eines von einem konkaven Führungsteil (26) und einem Führungsvorsprung (25) aufweist, der in Richtung auf ein externes Basismaterial (10) geführt ist, an dem der externe Anschluss (11a) befestigt ist, und die sich in einer Richtung erstrecken, in der der externe Anschluss (11a) eingesetzt wird.

2. Schaltervorrichtung nach Anspruch 1,
wobei:
das Gehäuse (20a) einen unteren Teil aufweist, der einer Befestigungsfläche (10a) des externen Basismaterials (10) zugewandt ist, an dem der externe Anschluss (11a) befestigt ist, sowie ferner zwei Seitenteile aufweist, die sich von der Befestigungsfläche (10a) nach oben erstrecken, wobei sich der untere Teil zwischen den beiden Seitenteilen befindet;
die Öffnung (54) in dem unteren Teil gebildet ist; und
jedes der beiden Seitenteile mindestens eines von dem konkaven Führungsteil (26) und dem Führungsvorsprung (25) aufweist.

3. Schaltervorrichtung nach Anspruch 1 oder 2,
wobei mindestens eines von dem konkaven Führungsteil (26) und dem Führungsvorsprung (25) zwischen der Öffnung (54) und dem Betätigungskörper (34) vorgesehen ist.

4. Schaltervorrichtung nach einem der Ansprüche 1 bis 3,
wobei:
das Gehäuse (20a) gebildet ist, indem ein erstes Gehäuseelement (21) und ein zweites Gehäuseelement (22) miteinander kombiniert sind; und
der Führungsvorsprung (25) in einem Bereich gebildet ist, in dem das erste Gehäuseelement (21) und das zweite Gehäuseelement (22) miteinander kombiniert sind.

5. Schaltervorrichtung nach Anspruch 4,
wobei das konkave Führungsteil (26) in einem von dem ersten Gehäuseelement (21) und dem zweiten Gehäuseelement (22) gebildet ist.

6. Schaltervorrichtung nach Anspruch 4,
wobei:
das Gehäuse (20a) gebildet ist, indem das erste Gehäuseelement (21) und das zweite Gehäuseelement (22) miteinander kombiniert sind;
der Führungsvorsprung (25) in einem Bereich gebildet ist, in dem das erste Gehäuseelement (21) und das zweite Gehäuseelement (22) miteinander kombiniert sind; und
das konkave Führungsteil (26) in einem von dem ersten Gehäuseelement (21) und dem zweiten Gehäuseelement (22) gebildet ist.

7. Schaltervorrichtung nach einem derAnsprüche 4 bis 6,
wobei:
das erste Gehäuseelement (21) den Betätigungskörper (34) und den beweglichen Kontakt (36) aufweist;
das zweite Gehäuseelement (22) die Öffnung (54) aufweist; und
das Anschlussverbindungsteil (40a) in dem zweiten Gehäuseelement (22) angeordnet ist.

8. Schaltervorrichtung nach einem derAnsprüche 4 bis 7,
wobei eines von dem ersten Gehäuseelement (21) und dem zweiten Gehäuseelement (22) eine Positionierungsstruktur aufweist, die eine Positionierung auf dem externen Basismaterial (10) erzielt, an dem der externe Anschluss (11a) befestigt ist.

9. Schaltervorrichtung nach Anspruch 8,
wobei die internen Anschlüsse (31, 32) in Bezug auf das Gehäuseelement mit der Positionierungsstruktur integriert vorgesehen sind.

10. Schaltervorrichtung nach Anspruch 9,
wobei:
die internen Anschlüsse (31, 32) von einem Anschlusshalteelement (27) gehalten sind; und
das Anschlusshalteelement (27) positioniert ist, indem es an dem Gehäuseelement mit der Positionierungsstruktur anliegt.

11. Schaltervorrichtung nach Anspruch 10,
wobei:
das Anschlusshalteelement (27) eine Trennwand (27h) aufweist; und
die Anschlussverbindungsteile (40a, 40b) derart angeordnet sind, dass die Trennwand (27h) zwischen den Anschlussverbindungsteilen (40a, 40b) liegt.

12. Schaltervorrichtung nach einem der Ansprüche 8 bis 11,
wobei die Positionierungsstruktur eine Positionierungserhebung (51) aufweist, die von dem Gehäuseelement in Richtung auf das externe Basismaterial (10) hervorsteht.

13. Schaltervorrichtung nach einem der Ansprüche 8 bis 11,
wobei die Positionierungsstruktur eine Rippe (56a) aufweist, die an einer Innenfläche des konkaven Führungsteils (26) angeordnet ist.

14. Schaltervorrichtung nach einem derAnsprüche 1 bis 13,
wobei:
ein Passvorsprung (53) an dem Gehäuse (20a) derart ausgebildet ist, dass er in der Richtung hervorsteht, in der der externe Anschluss (11a) von dem unteren Teil her eingeführt wird;
die Öffnung (54) in dem Passvorsprung (53) gebildet ist; und
ein Dichtungselement (55) aus einem elastischen Material an einem Außenumfang des Passvorsprungs (53) angebracht ist.

15. Schaltervorrichtung nach Anspruch 14,
wobei das Dichtungselement (55) in der Richtung, in der der externe Anschluss (11a) eingeführt wird, vertikal symmetrisch ist.

16. Erfassungsvorrichtung, aufweisend:
die Schaltervorrichtung (20) nach einem derAnsprüche 1 bis 15;
ein externes Basismaterial (10);
mindestens zwei externe Anschlüsse (11a), die an dem externen Basismaterial (10) befestigt sind; und
einen Führungsträger (13), der auf dem externen Basismaterial (10) derart gebildet ist, dass er in einer Richtung ausgerichtet ist, in der sich die externen Anschlüsse (11a) erstrecken;
wobei
die Schaltervorrichtung (20) auf dem externen Basismaterial (10) angeordnet ist,
mindestens eines von dem konkaven Führungsteil (26) und dem Führungsvorsprung (25) von dem Führungsträger (13) geführt ist, und
die externen Anschlüsse (11a) von der Öffnung (54) in einen Innenraum des Gehäuses (20a) eintreten und mit den Anschlussverbindungsteilen (40a, 40b) verbunden sind.

17. Erfassungsvorrichtung, aufweisend:
die Schaltervorrichtung (20) nach einem derAnsprüche 8 bis 13;
ein externes Basismaterial (10);
mindestens zwei externe Anschlüsse (11a), die an dem externen Basismaterial (10) befestigt sind;
einen Positionierungsträger (16), der in dem externen Basismaterial (10) gebildet ist; und
einen Führungsträger (13), der auf dem externen Basismaterial (10) derart gebildet ist, dass er in einer Richtung ausgerichtet ist, in der sich die externen Anschlüsse (11a) erstrecken;
wobei
die Schaltervorrichtung (20) auf dem externen Basismaterial (10) angeordnet ist,
mindestens eines von dem konkaven Führungsteil (26) und dem Führungsvorsprung (25) von dem Führungsträger (13) geführt ist,
das Gehäuse (20a) positioniert ist, indem die Positionierungsstruktur und der Positionierungsträger (16) aneinander gepasst werden, und
die externen Anschlüsse (11a) von der Öffnung (54) in einen Innenraum des Gehäuses (20a) eintreten und mit den Anschlussverbindungsteilen (40a, 40b) verbunden sind.

18. Erfassungsvorrichtung, aufweisend:
die Schaltervorrichtung (20) nach Anspruch 14 oder 15;
ein externes Basismaterial (10);
mindestens zwei externe Anschlüsse (11a), die an dem externen Basismaterial (10) befestigt sind; und
einen Führungsträger (13), der auf dem externen Basismaterial (10) derart gebildet ist, dass er in einer Richtung ausgerichtet ist, in der sich die externen Anschlüsse (11a) erstrecken;
wobei
die Schaltervorrichtung (20) auf dem externen Basismaterial (10) angeordnet ist,
mindestens eines von dem konkaven Führungsteil (26) und dem Führungsvorsprung (25) von dem Führungsträger (13) geführt ist,
die externen Anschlüsse (11a) von der Öffnung (54) in einen Innenraum des Gehäuses (20a) eintreten und mit den Anschlussverbindungsteilen (40a, 40b) verbunden sind,
eine die externen Anschlüsse (11a) umschließende Wandfläche auf dem externen Basismaterial gebildet ist, und
das Dichtungselement (55) zwischen dem Passvorsprung (53) und der Wandfläche angebracht ist.

## Revendications

1. Dispositif de commutation qui comprend :
un logement (20a) ;
au moins deux bornes internes (31, 32) prévues dans le logement (20a) ;
un contact mobile (36) ; et
un corps de manipulation (34) qui actionne le contact mobile (36) ;
**caractérisé en ce que** :
une ouverture (54) dans laquelle on peut insérer une borne externe (11a) est pratiquée dans le logement (20a) ;
chaque borne interne (31) possède un élément tactile (31a) faisant office de contact qui est relié par voie électrique au contact mobile (36) et possède également un élément (40a) destiné à la connexion à une borne, qui peut être connecté à la borne externe (11a) qui est insérée dans le logement (20a); et
le logement (20a) possède au moins un élément qui est choisi parmi un élément concave (26) faisant office de guide et une protubérance (25) faisant office de guide, qui est guidé dans la direction d'une matière de base externe (10) à laquelle est fixée la borne externe (11a) et qui s'étend dans une direction dans laquelle la borne externe (11a) est insérée.

2. Dispositif de commutation selon la revendication 1, dans lequel :
le logement (20a) possède une partie inférieure qui est opposée à une surface de fixation (10a) de la matière de base externe (10) à laquelle est fixée la borne externe (11a) et possède également deux parties latérales qui se dressent à partir de la surface de fixation (10a), la partie de base venant s'intercaler entre les deux parties latérales ;
l'ouverture (54) est pratiquée dans la partie de base ; et
chacune des deux parties latérales possède au moins un élément qui est choisi parmi l'élément concave (26) faisant office de guide et la protubérance (25) faisant office de guide.

3. Dispositif de commutation selon la revendication 1 ou 2, dans lequel au moins un élément qui est choisi parmi l'élément concave (26) faisant office de guide et la protubérance (25) faisant office de guide est prévu entre l'ouverture (54) et le corps de manipulation (34).

4. Dispositif de commutation selon l'une quelconque des revendications 1 à 3, dans lequel :
le logement (20a) est réalisé par l'intermédiaire d'une combinaison réciproque entre un premier boîtier (21) et un deuxième boîtier (22) ; et
la protubérance (25) faisant office de guide est réalisée sur une portion dans laquelle le premier boîtier (21) et le deuxième boîtier (22) sont combinés l'un à l'autre.

5. Dispositif de commutation selon la revendication 4, dans lequel l'élément concave (26) faisant office de guide est réalisé dans un boîtier choisi parmi le premier boîtier (21) et le deuxième boîtier (22).

6. Dispositif de commutation selon la revendication 4, dans lequel :
le logement (20a) est réalisé par l'intermédiaire d'une combinaison réciproque entre le premier boîtier (21) et le deuxième boîtier (22) ;
la protubérance (25) faisant office de guide est réalisée sur une portion dans laquelle le premier boîtier (21) et le deuxième boîtier (22) sont combinés l'un à l'autre ; et
l'élément concave (26) faisant office de guide est réalisé dans un boîtier choisi parmi le premier boîtier (21) et le deuxième boîtier (22).

7. Dispositif de commutation selon l'une quelconque des revendications 4 à 6, dans lequel :
le premier boîtier (21) possède le corps de manipulation (34) et le contact mobile (36) ;
le deuxième boîtier (22) possède l'ouverture (54) ; et
l'élément (40a) destiné à la connexion à une borne est disposé dans le deuxième boîtier (22).

8. Dispositif de commutation selon l'une quelconque des revendications 4 à 7, dans lequel un boîtier choisi parmi le premier boîtier (21) et le deuxième boîtier (22) possède une structure de positionnement qui permet de réaliser le positionnement sur la matière de base externe (10) à laquelle est fixée la borne externe (11a).

9. Dispositif de commutation selon la revendication 8, dans lequel les bornes internes (31, 32) sont incorporées dans le boîtier qui possède la structure de positionnement.

10. Dispositif de commutation selon la revendication 9, dans lequel :
les bornes internes (31, 32) sont maintenues par un élément de maintien de borne (27) ; et
l'élément de maintien de borne (27) est positionné en venant le disposer en position adjacente au boîtier qui possède la structure de positionnement.

11. Dispositif de commutation selon la revendication 10, dans lequel :
l'élément de maintien de borne (27) possède une paroi de séparation (27h) ; et
les éléments (40a, 40b) destinés à une connexion à des bornes sont disposés d'une manière telle que la paroi de séparation (27h) vient s'intercaler entre les éléments (40a, 40b) destinés à une connexion à des bornes.

12. Dispositif de commutation selon l'une quelconque des revendications 8 à 11, dans lequel la structure de positionnement possède une protubérance de positionnement (51) qui fait saillie par rapport au boîtier dans la direction de la matière de base externe (10).

13. Dispositif de commutation selon l'une quelconque des revendications 8 à 11, dans lequel la structure de positionnement possède une nervure (56a) qui est disposée sur une surface interne de l'élément concave (26) faisant office de guide.

14. Dispositif de commutation selon l'une quelconque des revendications 1 à 13, dans lequel :
une protubérance d'ajustement (53) est formée sur le logement (20a) de manière à faire saillie dans la direction dans laquelle la borne externe (11a) est insérée à partir de la partie inférieure ;
l'ouverture (54) est formée dans la protubérance d'ajustement (53) ; et
un élément d'étanchéisation (55) réalisé à partir d'une matière élastique est fixé à une circonférence externe de la protubérance d'ajustement (53).

15. Dispositif de commutation selon la revendication 14, dans lequel l'élément d'étanchéisation (55) est disposée en symétrie verticale dans la direction dans laquelle la borne externe (11a) est insérée.

16. Appareil de détection qui comprend :
le dispositif de commutation (20) selon l'une quelconque des revendications 1 à 15 ;
une matière de base externe (10) ;
au moins deux bornes externes (11a) qui sont fixées à la matière de base externe (10) ; et
un support (13) faisant office de guide qui est formé sur la matière de base externe (10) de manière à être orienté dans une direction dans laquelle s'étendent les bornes externes (11a) ; dans lequel
le dispositif de commutation (20) est disposé sur la matière de base externe (10) ;
au moins un élément choisi parmi l'élément concave (26) faisant office de guide et la protubérance (25) faisant office de guide est guidé par l'intermédiaire du support (13) faisant office de guide ; et
les bornes externes (11a) pénètrent à l'intérieur du logement (20a) à partir de l'ouverture (54) et sont reliées aux éléments (40a, 40b) destinés à une connexion à des bornes.

17. Appareil de détection qui comprend :
le dispositif de commutation (20) selon l'une quelconque des revendications 8 à 13 ;
une matière de base externe (10) ;
au moins deux bornes externes (11a) qui sont fixées à la matière de base externe (10) ;
un support de positionnement (16) qui est formé dans la matière de base externe (10) ; et
un support (13) faisant office de guide qui est formé sur la matière de base externe (10) de manière à être orienté dans une direction dans laquelle s'étendent les bornes externes (11a) ; dans lequel :
le dispositif de commutation (20) est disposé sur la matière de base externe (10) ;
au moins un élément qui est choisi parmi l'élément concave (26) faisant office de guide et la protubérance (25) faisant office de guide est guidé par le support (13) faisant office de guide ;
le logement (20a) est positionné en disposant la structure de positionnement et le support de positionnement l'un par rapport à l'autre ; et
les bornes externes (11a) pénètrent à l'intérieur du logement (20a) à partir de l'ouverture (54) et sont reliées aux éléments (40a, 40b) destinés à une connexion à des bornes.

18. Appareil de détection qui comprend :
le dispositif de commutation (20) selon la revendication 14 ou 15;
une matière de base externe (10) ;
au moins deux bornes externes (11a) qui sont fixées à la matière de base externe (10) ; et
un support (13) faisant office de guide qui est formé sur la matière de base externe (10) de manière à être orienté dans une direction dans laquelle s'étendent les bornes externes (11a) ; dans lequel
le dispositif de commutation (20) est disposé sur la matière de base externe (10) ;
au moins un élément choisi parmi l'élément concave (26) faisant office de guide et la protubérance (25) faisant office de guide est guidé par l'intermédiaire du support (13) faisant office de guide ;
les bornes externes (11a) pénètrent à l'intérieur du logement (20a) à partir de l'ouverture (54) et sont reliées aux éléments (40a, 40b) destinés à une connexion à des bornes ;
une surface faisant office de paroi renfermant les bornes externes (11a) est formée sur la matière de base externe ; et
l'élément d'étanchéisation (55) est fixé entre la protubérance d'ajustement (53) et la surface faisant office de paroi.
